# EUROPEAN PATENT APPLICATION

(11) **EP 4 832 082 A1**
(43) Date of publication of application: **28.10.2026**
(21) Application number: 24908032.6
(22) Date of filing: 17.12.2024
(51) Int. Cl.: H01M 4/36, C01G 53/00, H01M 4/525, H01M 4/505, H01M 4/131, H01M 10/052, H01M 4/02

(54) **CATHODE ACTIVE MATERIAL FOR LITHIUM SECONDARY BATTERY, PREPARATION METHOD THEREFOR, LITHIUM SECONDARY BATTERY COMPRISING SAME**

(30) Priority: 18.12.2023 KR 20230184346
(71) Applicant: POSCO Holdings Inc., Pohang-si, Gyeongsangbuk-do 37859 (KR)
(72) Inventor: PARK, Jung Woo, Pohang-si, Gyeongsangbuk-do 37859 (KR); KIM, Young Sang, Pohang-si, Gyeongsangbuk-do 37859 (KR); YU, Byongyong, Pohang-si, Gyeongsangbuk-do 37859 (KR); HONG, Kijoo, Pohang-si, Gyeongsangbuk-do 37859 (KR); LEE, Dong Jae, Pohang-si, Gyeongsangbuk-do 37859 (KR)
(74) Representative: Pfenning, Meinig & Partner mbB
(86) International application number: PCT/KR2024/020540
(87) International publication number: WO 2025/135749

(57) **Abstract**

The present invention relates to a positive electrode active material for a lithium secondary battery, including a lithium metal oxide having a single particle form and a nickel (Ni)-containing layered crystal structure, and a coating layer surrounding an entire surface of the lithium metal oxide and containing an aluminum (Al) compound, wherein the lithium metal oxide has a c-axis lattice constant of 14.14 to 14.22 Å when analyzed by an X-ray diffraction pattern, and the coating layer has an average thickness of 0.5 to 1.5 nm.

## Description

### [TECHNICAL FIELD]

The present invention relates to a positive electrode active material for a lithium secondary battery, a method for manufacturing the same, and a lithium secondary battery including the same, and more particularly, to a single-particle-type positive electrode active material for a lithium secondary battery, a method for manufacturing the same, and a lithium secondary battery including the same.

### [BACKGROUND ART]

As positive electrode active materials for lithium secondary batteries, lithium cobalt oxide (LiCoO₂), lithium nickel oxide (LiNiO₂), lithium manganese oxide (LiMnO₂, LiMnO₄, or the like), lithium iron phosphate compounds (LiFePO₄), and the like have been used. Among these, lithium cobalt oxide has advantages of a high operating voltage and excellent capacity characteristics, but cobalt, which is a raw material thereof, is expensive and has an unstable supply, and thus is difficult to commercially apply to large-capacity batteries. Lithium nickel oxide has poor structural stability, and thus it is difficult to implement sufficient lifespan characteristics. Meanwhile, lithium manganese oxide has excellent stability but has a problem of poor capacity characteristics. Accordingly, lithium composite transition metal oxides including two or more kinds of transition metals have been developed so as to compensate for problems of lithium transition metal oxides including Ni, Co, or Mn alone, and among these, lithium nickel cobalt manganese oxide including Ni, Co, and Mn is widely used in the field of electric vehicle batteries.

Conventional lithium nickel cobalt manganese oxide was generally in the form of spherical secondary particles in which tens to hundreds of primary particles were aggregated. However, in the case of lithium nickel cobalt manganese oxide in the form of secondary particles in which many primary particles are aggregated as described above, there are problems in that particle breakage, in which primary particles are separated during a rolling process when manufacturing a positive electrode, is likely to occur, and cracks occur inside particles during charging and discharging. When particle breakage or cracks of the positive electrode active material occur, a contact area with an electrolyte solution increases, thereby increasing gas generation and active material deterioration due to side reactions with the electrolyte solution, and thus lifespan characteristics deteriorate.

In addition, demand for high-output and high-capacity batteries, such as batteries for electric vehicles, has recently increased, and accordingly, the nickel content in positive electrode active materials has gradually increased, that is, so-called "high nickel." When the nickel content in the positive electrode active material increases, initial capacity characteristics are improved. However, when charging and discharging are repeated, a large amount of highly reactive Ni⁴⁺ ions is generated, causing structural collapse of the positive electrode active material, thereby increasing a deterioration rate of the positive electrode active material, deteriorating lifespan characteristics, and reducing battery safety.

In order to solve the above problems, a technology of manufacturing a positive electrode active material in a single particle form, rather than a secondary particle form, by increasing a calcination temperature when manufacturing lithium nickel cobalt manganese oxide has been proposed. In the case of a positive electrode active material in a single particle form, since a contact area with an electrolyte solution is smaller than that of a conventional positive electrode active material in a secondary particle form, side reactions with the electrolyte solution are reduced, and particle strength is excellent, thereby reducing particle breakage during electrode manufacture. Accordingly, when a positive electrode active material in a single particle form is applied, there are advantages that gas generation is reduced and lifespan characteristics are excellent.

However, in order to grow a high-nickel single-particle-form lithium transition metal oxide into a positive electrode active material having a particle diameter of several micrometers, calcination at a high temperature for a long time is required. At this time, when calcination is performed at a high temperature for a long time, defects in a layered crystal structure occur due to over-calcination, and since the material is manufactured at a relatively high calcination temperature, a rocksalt phase is formed on the particle surface, thereby increasing surface resistance and reducing mobility of lithium ions. Such a reduction in lithium ion mobility causes an imbalance in lithium ion migration, thereby causing crystal structure deformation and particle cracking, and thus there is a problem in that lifespan characteristics deteriorate, for example, capacity decreases as cycles proceed. In addition, a high-nickel single-particle positive electrode material has a high content of residual lithium (LiOH and/or Li₂CO₃) remaining on the surface after manufacture of the positive electrode material, and thus has a problem of impairing safety of the battery.

### [DETAILED DESCRIPTION OF THE INVENTION]

### [Technical Problem]

Accordingly, an object of the present invention is to provide a positive electrode active material for a lithium secondary battery, as a lithium metal oxide in a single particle form, in which lifespan characteristics are improved and residual lithium is reduced, a method for manufacturing the same, and a lithium secondary battery including the same.

### [Technical Solution]

One embodiment of the present invention provides a positive electrode active material for a lithium secondary battery, including a lithium metal oxide having a single particle form and a nickel (Ni)-containing layered crystal structure, and a coating layer surrounding an entire surface of the lithium metal oxide and containing an aluminum (Al) compound, wherein the lithium metal oxide has a c-axis lattice constant of 14.14 to 14.22 Å when analyzed by an X-ray diffraction pattern, and the coating layer has an average thickness of 0.5 to 1.5 nm.

The lithium metal oxide may have a ratio of a peak intensity of a (003) plane to a peak intensity of a (104) plane (I(003)/I(104)) of 1.44 to 1.6 when analyzed by an X-ray diffraction pattern.

A content of an aluminum element in the positive electrode active material may be 500 to 1000 ppm based on a total weight of the positive electrode active material.

The aluminum compound may include Al₂O₃, and the Al₂O₃ may be amorphous.

The positive electrode active material may have a residual lithium content of 15000 ppm or less.

A content of nickel in the lithium metal oxide may be 80 mol% or more based on the total number of moles of metals excluding lithium.

The lithium metal oxide may be represented by the following Chemical Formula 1.

[Chemical Formula 1] Liₐ[NiₓCo_{y}Mn_{z}M_{w}]O₂

In Chemical Formula 1, 0.8≤a≤1.3, 0.8≤x<1, 0≤y≤0.2, 0≤z≤0.2, 0≤w≤0.2, x+y+z+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

Another embodiment of the present invention provides a method for manufacturing a positive electrode active material for a lithium secondary battery, including preparing a lithium metal oxide having a single particle form and a nickel (Ni)-containing layered crystal structure; forming a coating layer containing an aluminum compound on the lithium metal oxide by an atomic layer deposition method; and heat-treating the lithium metal oxide on which the coating layer is formed at a temperature of 370 to 530°C to form a positive electrode active material.

The atomic layer deposition may be performed in 1 cycle.

One cycle of the atomic layer deposition may include supplying an aluminum-containing gas onto the lithium metal oxide to adsorb the aluminum-containing gas onto the lithium metal oxide; and supplying and reacting a reactant onto the lithium metal oxide on which the aluminum-containing gas is adsorbed.

A supply amount of the aluminum-containing gas may be 0.1 to 2 wt% based on a total weight of the lithium metal oxide.

A supply amount of the reactant may be 0.001 to 0.01 wt% based on a total weight of the lithium metal oxide.

The atomic layer deposition may be performed at a temperature of 150 to 300°C.

The atomic layer deposition may be performed at a pressure of 1 to 10 torr.

Still another embodiment of the present invention provides a positive electrode for a lithium secondary battery including the above-described positive electrode active material.

Still another embodiment of the present invention provides a lithium secondary battery including the positive electrode for a lithium secondary battery.

### [Advantageous Effects]

The positive electrode active material for a lithium secondary battery according to one embodiment of the present invention is a lithium metal oxide in a single particle form, and lifespan characteristics may be improved and residual lithium may be reduced. In addition, the positive electrode active material for a lithium secondary battery according to one embodiment of the present invention can implement excellent capacity characteristics.

### [BRIEF DESCRIPTION OF THE DRAWINGS]

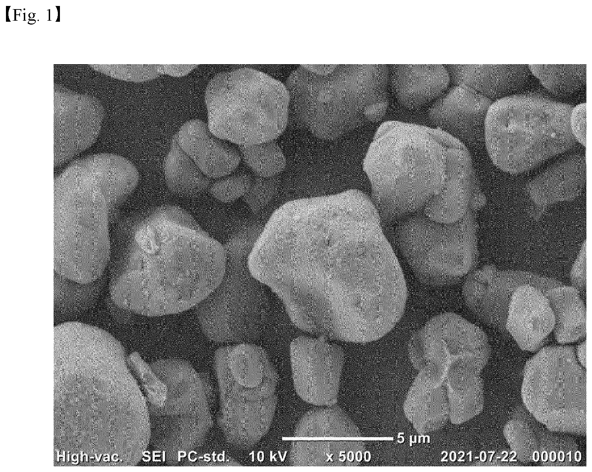

FIG. 1 is an SEM image of a positive electrode active material manufactured according to Example 1.

### [MODE FOR CARRYING OUT THE INVENTION]

Terms such as first, second, and third are used to describe various parts, components, regions, layers, and/or sections, but are not limited thereto. These terms are used only to distinguish one part, component, region, layer, or section from another part, component, region, layer, or section. Accordingly, a first part, component, region, layer, or section described below may be referred to as a second part, component, region, layer, or section without departing from the scope of the present invention.

The terminology used herein is merely for referring to particular embodiments and is not intended to limit the present invention. As used herein, singular forms also include plural forms unless the phrases clearly indicate the contrary. As used in the specification, the meaning of "comprising" specifies stated features, regions, integers, steps, operations, elements, and/or components, and does not exclude the presence or addition of other features, regions, integers, steps, operations, elements, and/or components.

When a part is referred to as being "above" or "on" another part, it may be directly above or on the other part, or another part may be interposed therebetween. In contrast, when a part is referred to as being "directly above" another part, no other part is interposed therebetween.

Although not otherwise defined, all terms used herein, including technical and scientific terms, have the same meanings as commonly understood by a person having ordinary skill in the art to which the present invention pertains. Terms defined in commonly used dictionaries are further interpreted as having meanings consistent with the related technical literature and the presently disclosed content, and unless defined otherwise, are not interpreted in an idealized or overly formal sense.

In addition, unless specifically stated otherwise, % means wt%, and 1 ppm is 0.0001 wt%.

In the present specification, the term "combination(s) thereof" described in a Markush-type expression means a mixture or combination of one or more selected from the group consisting of the components described in the Markush-type expression, and means including at least one selected from the group consisting of the components.

Hereinafter, embodiments of the present invention will be described in detail so that a person having ordinary skill in the art to which the present invention pertains can easily practice the present invention. However, the present invention may be implemented in various different forms and is not limited to the embodiments described herein.

### 1. Positive Electrode Active Material

The positive electrode active material for a lithium secondary battery according to one embodiment of the present invention includes a lithium metal oxide in a single particle form. A positive electrode active material in a single particle form has a smaller specific surface area than a conventional general secondary particle, thereby reducing the amount of gas generated due to side reactions with an electrolyte solution, has high particle strength, thereby suppressing particle breakage during rolling, and can reduce crack occurrence as charging and discharging are repeated. Accordingly, the positive electrode active material has advantages of excellent lifespan and safety as compared with secondary particles, and can implement high energy density of an electrode.

In the present specification, "single particle" is a term used to distinguish from positive electrode active material particles in the form of secondary particles formed by aggregation of tens to hundreds of primary particles, which have conventionally been generally used, and is a concept including a single particle composed of one primary particle and aggregate particles of 30 or fewer primary particles. In addition, "secondary particle" means an aggregate, that is, a secondary structure, in which tens to hundreds of primary particles are aggregated by physical or chemical bonding between primary particles even without an intentional aggregation or granulation process for the primary particles.

In addition, "primary particle" means a minimum particle unit distinguished as one lump when a cross-section of a positive electrode active material is observed through a scanning electron microscope (SEM), and may be composed of one crystallite or a plurality of crystallites. In addition, "crystallite" means a distinguishable region in a primary particle in which atoms form a lattice structure in a certain direction.

In addition, the content of nickel in the lithium metal oxide according to the present invention may be 80 mol% or more based on the total number of moles of metals excluding lithium, and more specifically may be 85 mol% or more. Since the nickel content in the lithium metal oxide is included in such a high content, that is, so-called "high nickel," it is possible to achieve high capacity of the battery.

However, in order to grow a high-nickel single-particle-form lithium transition metal oxide into a positive electrode active material having a particle diameter of several micrometers, calcination at a high temperature for a long time is required. At this time, when calcination is performed at a high temperature for a long time, defects in a layered crystal structure occur due to over-calcination, and since the material is manufactured at a relatively high calcination temperature, a rocksalt phase is formed on the particle surface, thereby increasing surface resistance and reducing mobility of lithium ions. Such a reduction in lithium ion mobility causes an imbalance in lithium ion migration, thereby causing crystal structure deformation and particle cracking, and thus there is a problem in that lifespan characteristics deteriorate, for example, capacity decreases as cycles proceed. In addition, a high-nickel single-particle positive electrode material has a high content of residual lithium (LiOH and/or Li₂CO₃) remaining on the surface after manufacture of the positive electrode material, and thus has a problem of impairing safety of the battery.

Accordingly, the positive electrode active material for a lithium secondary battery according to one embodiment of the present invention includes a coating layer surrounding an entire surface of the lithium metal oxide and containing an aluminum (Al) compound. That is, the coating layer is a conformal type coating layer uniformly surrounding an entire surface of a single particle. Accordingly, compared with an island type coating layer, an effect of improving structural stability of the positive electrode active material is more favorably implemented, and lifespan characteristics of the positive electrode active material can be favorably implemented. In addition, when the coating layer is coated on the lithium metal oxide, a coating raw material reacts with some residual lithium remaining on the surface of the lithium metal oxide to form the coating layer, and this reaction occurs more effectively than in the island type coating layer, so that a residual lithium reduction effect can be more favorably implemented. Meanwhile, as described below, the conformal type coating layer can be obtained by applying a coating process using an atomic layer deposition method.

At this time, the average thickness of the coating layer is 0.5 to 1.5 nm, and more specifically may be 0.65 to 1.4 nm. When the average thickness of the coating layer is too thin, the coating-layer coating effect becomes insignificant, and the effect of improving lifespan characteristics of the positive electrode active material may be insignificant. When the average thickness of the coating layer is too thick, the coating layer acts as a resistor, and capacity characteristics of the positive electrode active material may be excessively deteriorated.

In addition, the average thickness of the coating layer may be measured by the following method. First, the thickness of the coating layer for one positive electrode active material particle (single particle) may be calculated by analyzing a cross-sectional TEM image after FIB (Focused Ion Bean) milling of the positive electrode active material particle, randomly selecting 10 positions from a surface portion of the positive electrode active material particle, and obtaining an average value of the coating layer thicknesses at the selected positions. Next, the average thickness of the coating layer may be calculated by obtaining an average of coating layer thicknesses measured by the same method as described above for 20 arbitrary positive electrode active material particles in the positive electrode active material powder.

However, the present inventors confirmed that, when a conformal type coating layer through an atomic layer deposition process is coated on a lithium metal oxide in a single particle form, an effect of improving lifespan characteristics due to coating is not as favorable as expected, and capacity characteristics of the positive electrode active material are reduced due to full-surface coating with a coating layer having poorer electrochemical activity than a lithium metal oxide base material.

Accordingly, the lithium metal oxide according to the present invention has a c-axis lattice constant of 14.14 to 14.22 Å, and more specifically 14.14 to 14.215 Å, when analyzed by an X-ray diffraction pattern. The c-axis lattice constant of the lithium metal oxide may mean a width through which lithium ions in the lithium metal oxide can move, and thus may have a significant influence on electrochemical characteristics of the battery. In the positive electrode active material according to the present invention, in addition to the above-described coating layer coating, the c-axis lattice constant of the lithium metal oxide is further controlled to the above range, and thus capacity and lifespan characteristics can be favorably implemented.

Meanwhile, the c-axis lattice constant in the above range can be obtained through additional heat treatment in an appropriate temperature range after the coating process, as described below.

In addition, the c-axis lattice constant of the lithium metal oxide may be estimated using peak broadening of XRD data and quantitatively calculated through the Scherrer equation.

In addition, the lithium metal oxide according to the present invention may have a ratio of a peak intensity of a (003) plane to a peak intensity of a (104) plane (I(003)/I(104)) of 1.44 to 1.6, and more specifically 1.44 to 1.5, when analyzed by an X-ray diffraction pattern. The ratio of the peak intensity of the (003) plane to the peak intensity of the (104) plane (I(003)/I(104)) when the lithium metal oxide is analyzed by an X-ray diffraction pattern may be used as an index of a so-called cation mixing ratio. At this time, a larger I(003)/I(104) peak intensity ratio may mean a smaller cation mixing ratio. Cation mixing refers to a phenomenon in which transition metal cations in transition metal layers are partially substituted into lithium layers in a lithium metal oxide having a layered crystal structure, that is, a layered crystal structure in which lithium layers and transition metal layers are alternately stacked. At this time, the ratio of transition metal cations substituted in the lithium layers is referred to as a cation mixing ratio. In particular, nickel ions having an ionic radius similar to that of lithium ions are representative transition metals substituted into lithium layers. At this time, when the cation mixing ratio of the lithium metal oxide is too large, mobility of lithium ions in the lithium layers is reduced, thereby deteriorating capacity and lifespan characteristics of the battery. Accordingly, the lithium metal oxide according to the present invention satisfies the above range of the I(003)/I(104) peak intensity ratio, and thus effects of improving capacity and lifespan characteristics of the positive electrode active material can be more favorably implemented.

Meanwhile, the I(003)/I(104) peak intensity ratio of the lithium metal oxide in the above range can be obtained through additional heat treatment in an appropriate temperature range after the coating process, as described below.

In addition, the content of the aluminum element in the positive electrode active material may be 500 to 1000 ppm based on the total weight of the positive electrode active material, and more specifically may be 750 to 950 ppm. When the content of the aluminum element in the positive electrode active material satisfies the above range, the average thickness of the coating layer and the like can be appropriately obtained within the ranges according to the present invention. Accordingly, capacity and lifespan of the positive electrode active material can be favorably implemented.

Meanwhile, the content of the aluminum element in the positive electrode active material may be measured through ICP (inductively coupled plasma spectroscopy) component analysis.

In addition, the aluminum compound present in the coating layer may include Al₂O₃, and the Al₂O₃ may be amorphous. Accordingly, lithium ion mobility may be improved, and capacity and output characteristics of the positive electrode active material may be more favorably implemented. Amorphousness of the aluminum compound may be confirmed by TEM (transmission electron microscope) image analysis or X-ray diffraction pattern analysis for the positive electrode active material.

In addition, the positive electrode active material according to the present invention may have a residual lithium content of 15000 ppm or less. Accordingly, gas generation and battery swelling caused by side reactions between residual lithium and an electrolyte solution can be suppressed, and battery safety can be improved. Meanwhile, the residual lithium content in the above range may be obtained through additional heat treatment after the coating process, as described below.

The lithium metal oxide according to the present invention may be more specifically represented by the following Chemical Formula 1.

[Chemical Formula 1] Liₐ[NiₓCo_{y}Mn_{z}M_{w}]O₂

In Chemical Formula 1, 0.8≤a≤1.3, 0.8≤x<1, 0≤y≤0.2, 0≤z≤0.2, 0≤w≤0.2, x+y+z+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

In the lithium metal oxide of Chemical Formula 1, lithium may be included in an amount corresponding to a, that is, 0.8≤a≤1.3. When a is too small, capacity may be reduced. When a is too large, the strength of the calcined positive electrode active material increases, so that pulverization may be difficult, and the amount of gas generation may increase due to an increase in lithium by-products. Considering the effect of improving capacity characteristics of the positive electrode active material by controlling the lithium content and a balance of sinterability during active material manufacture, the lithium may more preferably be included in an amount of 0.9≤a≤1.1.

In the lithium metal oxide of Chemical Formula 1, nickel may be included in an amount corresponding to x, that is, 0.8≤x<1. When the nickel content satisfies the above range, high capacity of the battery can be achieved.

In the lithium metal oxide of Chemical Formula 1, cobalt may be included in an amount corresponding to y, that is, 0≤y≤0.2. When the cobalt content is too small, crystallite size growth may be inhibited and output characteristics may be reduced. When the cobalt content is too large, manufacturing costs may increase and reversible capacity may decrease.

In the lithium metal oxide of Chemical Formula 1, manganese may be included in an amount corresponding to z, that is, 0≤z≤0.2. When the manganese content is too small, production unit cost may increase and active material stability may deteriorate. When the manganese content is too large, capacity and output characteristics of the battery may deteriorate.

In the lithium metal oxide of Chemical Formula 1, M, which is another doping element, may be included in an amount corresponding to w, that is, 0≤w1≤0.2. At this time, M may be Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof. The content of the other doping element may be appropriately selected to implement the other doping effect.

### 2. Method for Manufacturing Positive Electrode Active Material

Another embodiment of the present invention provides a method for manufacturing a positive electrode active material for a lithium secondary battery, including preparing a lithium metal oxide having a single particle form and a nickel (Ni)-containing layered crystal structure; forming a coating layer containing an aluminum compound on the lithium metal oxide by an atomic layer deposition method; and heat-treating the lithium metal oxide on which the coating layer is formed at a temperature of 370 to 530°C to form a positive electrode active material.

Hereinafter, the method for manufacturing a positive electrode active material for a lithium secondary battery according to another embodiment of the present invention will be described in detail step by step.

First, a lithium metal oxide having a single particle form and a nickel (Ni)-containing layered crystal structure is prepared.

More specifically, the lithium metal oxide in a single particle form may be prepared by preparing a metal precursor, mixing and calcining the metal precursor and a lithium raw material, and pulverizing the mixture.

The metal precursor may more specifically be a metal hydroxide.

The metal precursor may be manufactured, for example, by adding a complexing-agent-containing solution and a pH-adjusting-agent-containing solution to a metal-containing solution including a nickel raw material, a manganese raw material, or a cobalt raw material and performing a coprecipitation reaction.

The nickel raw material is not particularly limited as long as it is used in the art for manufacturing a positive electrode active material precursor. For example, the nickel raw material may be a nickel-containing sulfate, acetate, nitrate, halide, sulfide, hydroxide, oxide, oxyhydroxide, or the like, and specifically may be NiSO₄, NiSO₄·6H₂O, Ni(OH)₂, NiO, NiOOH, NiCO₃·2Ni(OH)₂·4H₂O, NiC₂O₂·2H₂O, Ni(NO₃)₂·6H₂O, a nickel fatty acid salt, a nickel halide, or a combination thereof, but is not limited thereto.

The cobalt raw material is not particularly limited as long as it is used in the art for manufacturing a positive electrode active material precursor. For example, the cobalt raw material may be a cobalt-containing sulfate, acetate, nitrate, halide, sulfide, hydroxide, oxide, oxyhydroxide, or the like, and specifically may be CoSO₄, CoSO₄·7H₂O, Co(OH)₂, CoOOH, Co(OCOCH₃)₂·4H₂O, Co(NO₃)₂·6H₂O, or a combination thereof, but is not limited thereto.

The manganese raw material is not particularly limited as long as it is used in the art for manufacturing a positive electrode active material precursor. For example, the manganese raw material may be a manganese-containing sulfate, acetate, nitrate, halide, sulfide, hydroxide, oxide, oxyhydroxide, or a combination thereof, and specifically may be MnSO₄, MnCO₃, Mn(NO₃)₂, manganese acetate, a manganese dicarboxylate salt, manganese citrate, a manganese salt such as a manganese fatty acid salt, a manganese oxide such as Mn₂O₃, MnO₂, and Mn₃O₄, an oxyhydroxide, manganese chloride, or a combination thereof, but is not limited thereto.

The metal-containing solution may be prepared by adding a nickel raw material, a manganese raw material, or a cobalt raw material to a solvent, specifically water, or a mixture of water and an organic solvent that can be uniformly mixed with water, for example, alcohol or the like.

The complexing-agent-containing solution performs a complex-forming role, and may include, as a complexing agent, for example, NH₃, NH₄OH, (NH₄)₂SO₄, NH₄NO₃, NH₄Cl, CH₃COONH₄, NH₄CO₃, or a combination thereof, but is not limited thereto. Meanwhile, the complexing-agent-containing solution may be used in the form of an aqueous solution, and at this time, as a solvent, water, or a mixture of water and an organic solvent uniformly mixable with water, for example, alcohol or the like, may be used.

The pH-adjusting-agent-containing solution performs a role of a precipitant or a pH adjusting agent, and may include an alkaline compound of a hydroxide of an alkali metal or alkaline earth metal, such as NaOH, KOH, or Ca(OH)₂, a hydrate thereof, or a combination thereof. Meanwhile, the pH-adjusting-agent-containing solution may also be used in the form of an aqueous solution, and at this time, as a solvent, water, or a mixture of water and an organic solvent uniformly mixable with water, for example, alcohol or the like, may be used. At this time, the pH-adjusting-agent-containing solution may be added in an amount such that the pH of the reaction solution becomes 10 to 13.

The coprecipitation reaction may be performed under an inert atmosphere such as nitrogen or argon, may be performed at a temperature of 30 to 70°C, and may be performed at pH 10 to 13.

By the above process, particles of nickel(-or manganese-cobalt) hydroxide are generated and precipitated in the reaction solution. The precipitated precursor particles may be separated according to a conventional method, washed with water, and dried to obtain a precursor. The precursor may be a secondary particle formed by aggregation of primary particles.

At this time, by adjusting concentrations of the nickel raw material, the cobalt raw material, or the manganese raw material, a molar ratio of nickel, cobalt, or manganese in the precursor may be adjusted. That is, concentrations of the nickel raw material, the cobalt raw material, and the manganese raw material may be adjusted so that a molar ratio of nickel, cobalt, or manganese in the lithium metal oxide, which is a final product, becomes within the range according to the present invention.

As the lithium raw material, a lithium-containing sulfate, nitrate, acetate, carbonate, oxalate, citrate, halide, hydroxide, oxyhydroxide, or the like may be used, and it is not particularly limited as long as it can be dissolved in water. Specifically, the lithium raw material may be Li₂CO₃, LiNO₃, LiNO₂, LiOH, LiOH·H₂O, LiH, LiF, LiCl, LiBr, LiI, CH₃COOLi, Li₂O, Li₂SO₄, CH₃COOLi, Li₃C₆H₅O₇, or a combination thereof, but is not limited thereto.

In addition, the calcination may be performed at a temperature of 750 to 1000°C. When the calcination temperature is too low, the lithium metal oxide in a single particle form may not be formed. When the calcination temperature is too high, crystal structure defects due to over-calcination may occur, and electrochemical characteristics may deteriorate.

In addition, the calcination may be performed for 5 to 20 hours. When the calcination time is too short, the lithium metal oxide in a single particle form may not be formed. When the calcination time is too long, crystal structure defects due to over-calcination may occur, and electrochemical characteristics may deteriorate.

In addition, the atmosphere during the calcination is not particularly limited, but for example, the calcination may be performed in an oxygen (O₂) or air atmosphere.

The pulverization may be performed according to a conventional pulverization process in the art, and may be performed, for example, using a jet mill.

Next, the lithium metal oxide in a single particle form manufactured according to the above series of methods may be washed with water. Through this, residual lithium remaining on the surface after calcination of the lithium metal oxide can be reduced.

Next, a coating layer containing an aluminum compound is formed on the lithium metal oxide by an atomic layer deposition method.

At this time, the atomic layer deposition may be performed in 1 cycle. When the number of cycles performed during atomic layer deposition exceeds the above range, the thickness of the coating layer becomes too thick due to excessive coating, and capacity characteristics of the positive electrode active material may deteriorate.

One cycle of the atomic layer deposition may more specifically include supplying an aluminum-containing gas onto the lithium metal oxide to adsorb the aluminum-containing gas onto the lithium metal oxide; and supplying and reacting a reactant onto the lithium metal oxide on which the aluminum-containing gas is adsorbed.

At this time, the supply amount of the aluminum-containing gas may be 0.1 to 2 wt% based on the total weight of the lithium metal oxide, and more specifically may be 0.1 to 1 wt% or 0.1 to 0.5 wt%. When the supply amount of the aluminum-containing gas satisfies the above range, aluminum coating may be appropriately performed in units of atomic layer thickness per cycle. Accordingly, the average thickness of the coating layer may be appropriately implemented within the range according to the present invention, and capacity and lifespan characteristics of the positive electrode active material may be more favorably implemented.

In addition, the supply amount of the reactant may be 0.001 to 0.01 wt% based on the total weight of the lithium metal oxide, and more specifically may be 0.001 to 0.005 wt%. When the supply amount of the reactant satisfies the above range, aluminum coating may be appropriately performed in units of atomic layer thickness per cycle. Accordingly, the average thickness of the coating layer may be appropriately implemented within the range according to the present invention, and capacity and lifespan characteristics of the positive electrode active material may be more favorably implemented.

The aluminum-containing gas may be, for example, trimethoxyaluminum (Tri Methoxy Aluminium, TMA).

The reactant may be, for example, water (H₂O) or ozone (O₃).

The atomic layer deposition may be performed at a temperature of 150 to 300°C. When the temperature at which the atomic layer deposition is performed satisfies the above range, the aluminum-containing gas and the reactant smoothly react with each other, and an aluminum coating layer can be easily formed. Accordingly, the average thickness of the coating layer may be appropriately implemented within the range according to the present invention, and capacity and lifespan characteristics of the positive electrode active material may be more favorably implemented.

The atomic layer deposition may be performed at a pressure of 1 to 10 torr. When the pressure during atomic layer deposition satisfies the above range, the aluminum-containing gas and the reactant smoothly react with each other, and an aluminum coating layer can be easily formed. Accordingly, the average thickness of the coating layer may be appropriately implemented within the range according to the present invention, and capacity and lifespan characteristics of the positive electrode active material may be more favorably implemented.

Next, the lithium metal oxide on which the coating layer is formed is heat-treated at a temperature of 370 to 530°C to form a positive electrode active material.

At this time, the heat treatment is performed at a temperature of 370 to 530°C, and more specifically may be performed at a temperature of 380 to 520°C. After the coating process of atomic layer deposition, through additional heat treatment at a temperature within the above range, the c-axis lattice constant of the lithium metal oxide and the ratio of the peak intensity of the (003) plane to the peak intensity of the (104) plane (I(003)/I(104)) can be appropriately implemented within the ranges according to the present invention. Accordingly, capacity and lifespan characteristics of the positive electrode active material can be favorably implemented. The present inventors believe that this is because the layered crystal structure of the lithium metal oxide was more favorably controlled by additional heat treatment in an appropriate temperature range. In addition, through additional heat treatment after the coating process, the effect of reducing residual lithium of the positive electrode active material can be maximized.

### 3. Positive Electrode and Lithium Secondary Battery

Still another embodiment of the present invention provides a positive electrode for a lithium secondary battery including the above-described positive electrode active material.

More specifically, the positive electrode may include a positive electrode current collector and a positive electrode active material layer disposed on the positive electrode current collector and including the above-described positive electrode active material.

The positive electrode current collector is not particularly limited as long as it has conductivity without causing a chemical change in the battery, and for example, stainless steel, aluminum, nickel, titanium, calcined carbon, or aluminum or stainless steel surface-treated with carbon, nickel, titanium, silver, or the like may be used. In addition, the positive electrode current collector may typically have a thickness of 3 to 500 µm, and fine irregularities may be formed on the surface of the positive electrode current collector to increase adhesion of the positive electrode active material. For example, it may be used in various forms such as a film, a sheet, a foil, a net, a porous body, a foam, and a nonwoven body.

The positive electrode active material layer may include a binder and/or a conductive material together with the above-described positive electrode active material.

At this time, the binder serves to improve adhesion between positive electrode active material particles and adhesion between the positive electrode active material and the positive electrode current collector. Specific examples may include polyvinylidene fluoride (PVDF), a vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylenepropylene-diene monomer rubber (EPDM rubber), sulfonated EPDM, styrene butadiene rubber (SBR), fluorine rubber, or various copolymers thereof, and one thereof alone or a mixture of two or more thereof may be used, but the binder is not limited thereto. The binder may be included in an amount of 1 to 30 wt% based on the total weight of the positive electrode active material layer.

In addition, the conductive material is used to impart conductivity to the electrode, and any conductive material may be used without particular limitation as long as it has electron conductivity without causing chemical change in the battery to be configured. Specific examples may include graphite such as natural graphite or artificial graphite; carbon-based materials such as carbon black, acetylene black, Ketjen black, channel black, furnace black, lamp black, summer black, and carbon fibers; metal powder or metal fibers such as copper, nickel, aluminum, and silver; conductive whiskers such as zinc oxide and potassium titanate; conductive metal oxides such as titanium oxide; or conductive polymers such as polyphenylene derivatives, and one thereof alone or a mixture of two or more thereof may be used, but the conductive material is not limited thereto. The conductive material may typically be included in an amount of 1 to 30 wt% based on the total weight of the positive electrode active material layer.

The positive electrode may be manufactured according to a conventional method for manufacturing a positive electrode, except that the above-described positive electrode active material is used.

Specifically, the positive electrode may be manufactured by applying, onto a positive electrode current collector, a composition for forming a positive electrode active material layer including the above-described positive electrode active material and optionally a binder, a conductive material, or a solvent, and then drying and rolling the composition. At this time, the types and contents of the positive electrode active material, binder, and conductive material are as described above.

The solvent may be a solvent generally used in the art, and examples thereof may include dimethyl sulfoxide (DMSO), isopropyl alcohol, N-methylpyrrolidone (NMP), acetone, water, and the like, and one thereof alone or a mixture of two or more thereof may be used. The amount of the solvent used is sufficient as long as it dissolves or disperses the positive electrode active material, the conductive material, and the binder in consideration of a coating thickness and manufacturing yield of the slurry, and then provides a viscosity capable of exhibiting excellent thickness uniformity during coating for manufacturing the positive electrode.

Alternatively, the positive electrode may be manufactured by casting the composition for forming a positive electrode active material layer on a separate support, and then laminating a film obtained by peeling the composition from the support onto the positive electrode current collector.

Still another embodiment of the present invention provides a lithium secondary battery including the above-described positive electrode for a lithium secondary battery.

More specifically, the lithium secondary battery may include a positive electrode, a negative electrode, a separator, and an electrolyte.

The lithium secondary battery may optionally further include a battery case for accommodating an electrode assembly of the positive electrode, the negative electrode, and the separator, and a sealing member for sealing the battery case.

The negative electrode may include a negative electrode current collector and a negative electrode active material layer positioned on the negative electrode current collector.

The negative electrode current collector is not particularly limited as long as it has high conductivity without causing a chemical change in the battery, and examples thereof may include copper, stainless steel, aluminum, nickel, titanium, calcined carbon, copper or stainless steel surface-treated with carbon, nickel, titanium, silver, or the like, and an aluminum-cadmium alloy. In addition, the negative electrode current collector may typically have a thickness of 3 to 500 µm, and, as in the positive electrode current collector, fine irregularities may be formed on the surface of the current collector to strengthen bonding force of the negative electrode active material. For example, it may be used in various forms such as a film, a sheet, a foil, a net, a porous body, a foam, and a nonwoven body.

The negative electrode active material layer may optionally include a binder and a conductive material together with a negative electrode active material. As an example, the negative electrode active material layer may be manufactured by applying and drying, onto a negative electrode current collector, a composition for forming a negative electrode active material layer including a negative electrode active material and optionally a binder and a conductive material, or may be manufactured by casting the composition for forming a negative electrode on a separate support and then laminating a film obtained by peeling the composition from the support onto the negative electrode current collector.

As the negative electrode active material, a compound capable of reversible intercalation and deintercalation of lithium may be used. Specific examples may include carbonaceous materials such as artificial graphite, natural graphite, graphitized carbon fibers, and amorphous carbon; metallic compounds alloyable with lithium, such as Si, Al, Sn, Pb, Zn, Bi, In, Mg, Ga, Cd, Si alloys, Sn alloys, or Al alloys; metal oxides capable of doping and dedoping lithium, such as SiOβ (0<β<2), SnO₂, vanadium oxide, and lithium vanadium oxide; or composites including the metallic compound and a carbonaceous material, such as Si-C composites or Sn-C composites, and any one thereof or a mixture of two or more thereof may be used. In addition, a metallic lithium thin film may also be used as the negative electrode active material. In addition, as the carbon material, both low-crystalline carbon and high-crystalline carbon may be used. Representative examples of low-crystalline carbon include soft carbon and hard carbon, and representative examples of high-crystalline carbon include amorphous, plate-like, flake-like, spherical, or fibrous natural graphite or artificial graphite, Kish graphite, pyrolytic carbon, mesophase pitch-based carbon fibers, meso-carbon microbeads, mesophase pitches, and high-temperature calcined carbon such as petroleum or coal tar pitch-derived cokes.

The binder and the conductive material may be the same as those described above for the positive electrode.

The separator separates the negative electrode and the positive electrode and provides a movement path for lithium ions, and may be used without particular limitation as long as it is generally used as a separator in a lithium secondary battery. In particular, a separator having low resistance to ion movement of the electrolyte and excellent electrolyte solution impregnation ability is preferable. Specifically, a porous polymer film, for example, a porous polymer film manufactured from a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof may be used. In addition, a conventional porous nonwoven fabric, for example, a nonwoven fabric made of high-melting-point glass fibers, polyethylene terephthalate fibers, or the like may be used. In addition, a coated separator including a ceramic component or a polymer material may be used to secure heat resistance or mechanical strength, and may optionally be used in a single-layer or multilayer structure.

Examples of the electrolyte may include an organic liquid electrolyte, an inorganic liquid electrolyte, a solid polymer electrolyte, a gel-type polymer electrolyte, a solid inorganic electrolyte, a molten-type inorganic electrolyte, and the like that can be used for manufacturing a lithium secondary battery, but are not limited thereto.

Specifically, the organic liquid electrolyte may include an organic solvent and a lithium salt.

As the organic solvent, any solvent may be used without particular limitation as long as it can serve as a medium through which ions participating in an electrochemical reaction of the battery can move. Specifically, as the organic solvent, ester-based solvents such as methyl acetate, ethyl acetate, γ-butyrolactone, and ε-caprolactone; ether-based solvents such as dibutyl ether or tetrahydrofuran; ketone-based solvents such as cyclohexanone; aromatic hydrocarbon-based solvents such as benzene and fluorobenzene; carbonate-based solvents such as dimethyl carbonate (DMC), diethyl carbonate (DEC), methyl ethyl carbonate (MEC), ethyl methyl carbonate (EMC), ethylene carbonate (EC), and propylene carbonate (PC); alcohol-based solvents such as ethyl alcohol and isopropyl alcohol; nitriles such as R-CN (where R is a C2 to C20 linear, branched, or cyclic hydrocarbon group and may include a double-bond aromatic ring or an ether bond); amides such as dimethylformamide; dioxolanes such as 1,3-dioxolane; or sulfolanes may be used. Among these, carbonate-based solvents are preferable, and a mixture of a cyclic carbonate having high ionic conductivity and a high dielectric constant capable of improving charge and discharge performance of the battery, for example, ethylene carbonate or propylene carbonate, and a low-viscosity linear carbonate-based compound, for example, ethyl methyl carbonate, dimethyl carbonate, or diethyl carbonate, is more preferable. In this case, when the cyclic carbonate and the chain carbonate are mixed in a volume ratio of about 1:1 to about 1:9, the performance of the electrolyte solution may be excellent.

The lithium salt may be used without particular limitation as long as it is a compound capable of providing lithium ions used in a lithium secondary battery. Specifically, as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, or the like may be used. The concentration of the lithium salt is preferably used within a range of 0.1 to 2.0 M. When the concentration of the lithium salt is included in the above range, the electrolyte has appropriate conductivity and viscosity, thereby exhibiting excellent electrolyte performance, and lithium ions can effectively move.

In addition to the above electrolyte components, the electrolyte may further include one or more additives for the purpose of improving lifespan characteristics of the battery, suppressing a decrease in battery capacity, improving discharge capacity of the battery, and the like. Examples of the additives may include haloalkylene carbonate-based compounds such as difluoroethylene carbonate, pyridine, triethyl phosphite, triethanolamine, cyclic ethers, ethylene diamine, n-glyme, hexamethylphosphoric triamide, nitrobenzene derivatives, sulfur, quinone imine dyes, N-substituted oxazolidinone, N,N-substituted imidazolidine, ethylene glycol dialkyl ether, ammonium salts, pyrrole, 2-methoxyethanol, or aluminum trichloride. At this time, the additive may be included in an amount of 0.1 to 5 wt% based on the total weight of the electrolyte.

Since the lithium secondary battery including the positive electrode active material according to the present invention as described above stably exhibits excellent discharge capacity, output characteristics, and capacity retention, it is useful in portable devices such as mobile phones, notebook computers, and digital cameras, and in electric vehicle fields such as hybrid electric vehicles (HEVs).

Accordingly, still another embodiment of the present invention provides a battery module including the lithium secondary battery as a unit cell, and a battery pack including the battery module.

The battery module or the battery pack may be used as a power source for at least one medium-to-large device among a power tool; an electric vehicle including an electric vehicle (EV), a hybrid electric vehicle, and a plug-in hybrid electric vehicle (PHEV); or a power storage system.

Hereinafter, embodiments of the present invention will be described in more detail through Examples. However, the following Examples are merely preferred embodiments of the present invention, and the present invention is not limited by the following Examples.

### Example 1

### (1) Manufacture of Positive Electrode Active Material

(Preparation of Lithium Metal Oxide) A lithium metal oxide in a single particle form having a composition of LiNi₀.₈₈Co₀.₀₉₅Mn₀.₀₂₅O₂ was prepared.

Thereafter, the lithium metal oxide was washed with distilled water.

(Coating) A fluidized-bed type atomic layer deposition reactor was used, and low-vacuum conditions were maintained such that the reaction temperature was 150 to 300°C and the pressure inside the chamber was maintained at 1 to 10 torr. As a precursor, trimethylaluminum (TMA, Al(CH₃)₃) was used as an aluminum-containing gas, and water (H₂O) was used as a reactant.

The prepared lithium metal oxide was introduced into the atomic layer deposition reactor, and TMA was injected together with N₂ gas so as to be chemically adsorbed (chemisorption) and saturated on the lithium metal oxide base material, and then H₂O was injected again to cause a chemical reaction, thereby forming a coating layer containing an aluminum compound. In addition, the input amount of TMA per 1 cycle was 0.2 wt% based on the total weight of the lithium metal oxide, and the input amount of H₂O per 1 cycle was 0.002 wt% based on the total weight of the lithium metal oxide.

This series of processes is referred to as 1 cycle, and a total of 1 cycle was performed.

(Heat Treatment) Thereafter, the lithium metal oxide coated with the coating layer was heat-treated at a temperature of 400°C.

### (2) Manufacture of Lithium Secondary Battery

A slurry for manufacturing an electrode plate was prepared by mixing the manufactured positive electrode active material:conductive material (carbon black, denka black):binder (PVDF, KF1100) = 96.5:1.5:2 wt%, and adding NMP (N-methyl-2-pyrrolidone) to adjust the viscosity so that the solid content was about 30%. The manufactured slurry was coated on an Al foil having a thickness of 20 µm using a doctor blade, and then dried and rolled. The electrode loading amount was 15.4 mg/cm², and the rolling density (25°C, 20 kN) was 3.6 g/cm³.

As the electrolyte solution, 1 M LiPF₆ in EC:DMC:EMC=3:4:3 (vol%) to which 3.0 vol% of VC was added based on the total amount of the electrolyte solution was used, and a coin cell was manufactured using a PP separator and a lithium negative electrode (200 µm, Honzo metal).

### Example 2

A positive electrode active material and a lithium secondary battery were manufactured in the same manner as in Example 1, except that, in the heat treatment step, heat treatment was performed at a temperature of 450°C.

### Example 3

A positive electrode active material and a lithium secondary battery were manufactured in the same manner as in Example 1, except that, in the heat treatment step, heat treatment was performed at a temperature of 500°C.

### Comparative Example 1

A positive electrode active material and a lithium secondary battery were manufactured in the same manner as in Example 1, except that the coating and heat treatment steps were not performed.

### Comparative Example 2

A positive electrode active material and a lithium secondary battery were manufactured in the same manner as in Example 1, except that the heat treatment step was not performed.

### Comparative Example 3

A positive electrode active material and a lithium secondary battery were manufactured in the same manner as in Example 1, except that, in the heat treatment step, heat treatment was performed at a temperature of 250°C.

### Comparative Example 4

A positive electrode active material and a lithium secondary battery were manufactured in the same manner as in Example 1, except that, in the heat treatment step, heat treatment was performed at a temperature of 300°C.

### Comparative Example 5

A positive electrode active material and a lithium secondary battery were manufactured in the same manner as in Example 1, except that, in the heat treatment step, heat treatment was performed at a temperature of 350°C.

### Comparative Example 6

A positive electrode active material and a lithium secondary battery were manufactured in the same manner as in Example 1, except that, in the heat treatment step, heat treatment was performed at a temperature of 550°C.

### Comparative Example 7

A positive electrode active material and a lithium secondary battery were manufactured in the same manner as in Example 1, except that, in the heat treatment step, heat treatment was performed at a temperature of 600°C.

### Comparative Example 8

A positive electrode active material and a lithium secondary battery were manufactured in the same manner as in Example 1, except that, in the heat treatment step, heat treatment was performed at a temperature of 750°C.

### Comparative Example 9

A positive electrode active material and a lithium secondary battery were manufactured in the same manner as in Example 1, except that, in the coating step, the number of atomic layer deposition cycles was 2 cycles, and the heat treatment step was not performed.

### Comparative Example 10

A positive electrode active material and a lithium secondary battery were manufactured in the same manner as in Example 1, except that, in the coating step, the number of atomic layer deposition cycles was 2 cycles, and, in the heat treatment step, heat treatment was performed at a temperature of 450°C.

Table 1 below summarizes process conditions of the Examples and Comparative Examples.

**[Table 1]**

| | TMA Input Amount per 1 Cycle | H₂O Input Amount per 1 Cycle | Number of Atomic | Heat Treatment |
|---|---|---|---|---|
| | Based on Total Weight of Lithium Metal Oxide (wt%) | Based on Total Weight of Lithium Metal Oxide (wt%) | Layer Deposition Cycles | Temperature After Atomic Layer Deposition Process (°C) |
| Comparative Example 1 | - | - | - | - |
| Comparative Example 2 | 0.2 | 0.002 | 1 | 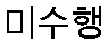 |
| Comparative Example 3 | 0.2 | 0.002 | 1 | 250 |
| Comparative Example 4 | 0.2 | 0.002 | 1 | 300 |
| Comparative Example 5 | 0.2 | 0.002 | 1 | 350 |
| Example 1 | 0.2 | 0.002 | 1 | 400 |
| Example 2 | 0.2 | 0.002 | 1 | 450 |
| Example 3 | 0.2 | 0.002 | 1 | 500 |
| Comparative Example 6 | 0.2 | 0.002 | 1 | 550 |
| Comparative Example 7 | 0.2 | 0.002 | 1 | 600 |
| Comparative Example 8 | 0.2 | 0.002 | 1 | 750 |
| Comparative Example 9 | 0.2 | 0.002 | 2 | 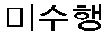 |
| Comparative Example 10 | 0.2 | 0.002 | 2 | 450 |

Tables 2 and 3 below summarize evaluation results of positive electrode active material physical properties and lithium secondary battery electrochemical characteristics, which will be described below.

**[Table 2]**

| | Average Thickness of Coating Layer (nm) | I(003)/I(104) Peak Intensity Ratio | c-Axis Lattice Constant (Å) | Al Element Content (ppm) | LiOH (ppm) | Li₂CO₃ (ppm) | Total Residual Lithium (ppm) |
|---|---|---|---|---|---|---|---|
| Comparative Example 1 | - | 1.4362 | 14.118 | N/A | 8,874 | 7,416 | 16,290 |
| Comparative Example 2 | 0.54 | 1.432 | 14.12 | 795 | 9115 | 7454 | 16,569 |
| Comparative Example 3 | 0.53 | 1.4372 | 14.122 | 823 | 9023 | 7665 | 16,688 |
| Comparative Example 4 | 0.68 | 1.437 | 14.11 | 652 | 9010 | 7420 | 16,430 |
| Comparative Example 5 | 0.62 | 1.438 | 14.13 | 752 | 8452 | 7110 | 15,562 |
| Example 1 | 0.72 | 1.4421 | 14.15 | 802 | 7850 | 6742 | 14,592 |
| Example 2 | 1.02 | 1.4526 | 14.196 | 795 | 7,140 | 6,515 | 13,655 |
| Example 3 | 1.36 | 1.451 | 14.211 | 784 | 6998 | 6436 | 13,434 |
| Comparative Example 6 | 1.69 | 1.4452 | 14.231 | 955 | 6320 | 6658 | 12,978 |
| Comparative Example 7 | 1.72 | 1.4458 | 14.225 | 987 | 5,026 | 6,915 | 11,941 |
| Comparative Example 8 | 1.59 | 1.4398 | 14.239 | 869 | 4,677 | 5,721 | 10,398 |
| Comparative Example 9 | 1.23 | 1.4322 | 14.136 | 1,270 | 7,073 | 6,852 | 13,925 |
| Comparative Example 10 | 1.62 | 1.4338 | 14.245 | 1358 | 6730 | 6320 | 13,050 |

**[Table 3]**

| | Initial Capacity Evaluation | | | High-Temperature Lifespan |
|---|---|---|---|---|
| | | | | Characteristics Evaluation |
| | Initial Charge Capacity (mAh/g) | Initial Discharge Capacity (mAh/g) | Initial Efficiency (%) | Capacity Retention Rate (45°C, 30 cycles, %) |
| Comparative Example 1 | 218.2 | 207.6 | 95.1 | 94.2 |
| Comparative Example 2 | 223.6 | 195 | 87.2 | 93.5 |
| Comparative Example 3 | 223.9 | 197.5 | 88.2 | 93.2 |
| Comparative Example 4 | 224.5 | 199.8 | 89.0 | 94.2 |
| Comparative Example 5 | 225.9 | 201.8 | 89.3 | 94.7 |
| Example 1 | 227.1 | 202 | 88.9 | 95 |
| Example 2 | 228.4 | 202.1 | 88.5 | 95.3 |
| Example 3 | 228.2 | 201.3 | 88.2 | 95.1 |
| Comparative Example 6 | 227.2 | 195.3 | 86.0 | 93.5 |
| Comparative Example 7 | 220 | 193 | 87.7 | 93.9 |
| Comparative Example 8 | 227.4 | 200.7 | 88.3 | 92.3 |
| Comparative Example 9 | 222.6 | 194.2 | 87.2 | 91.4 |
| Comparative Example 10 | 222.8 | 199.7 | 89.6 | 92.8 |

### Experimental Example 1: SEM Image Evaluation of Positive Electrode Active Material

An SEM (scanning electron microscope) image of the positive electrode active material manufactured according to Example 1 was observed, and is shown in FIG. 1.

Referring to FIG. 1, it was confirmed that the positive electrode active material of Example 1 was in a single particle form, and a plurality of spaced coating-adhered particles or the like were not observed on the particle surface, confirming that the coating layer was a conformal type uniformly surrounding the entire particle surface.

### Experimental Example 2: Evaluation of Physical Properties of Positive Electrode Active Material

### (1) Evaluation of Average Thickness of Coating Layer

First, the thickness of the coating layer for one positive electrode active material particle (single particle) was calculated by analyzing a cross-sectional TEM image after FIB (Focused Ion Bean) milling of the positive electrode active material particle, randomly selecting 10 positions from a surface portion of the positive electrode active material particle, and obtaining an average value of the coating layer thicknesses at the selected positions. Next, the average thickness of the coating layer was calculated by obtaining an average of coating layer thicknesses measured by the same method as described above for 20 arbitrary positive electrode active material particles in the positive electrode active material powder.

### (2) Evaluation of I(003)/I(104) Peak Intensity Ratio

The I(003)/I(104) peak intensity ratio was evaluated through X-ray diffraction pattern analysis.

### (3) Evaluation of c-Axis Lattice Constant

The c-axis lattice constant was evaluated through X-ray diffraction pattern analysis and Rietveld refinement.

### (4) Evaluation of Al Element Content in Positive Electrode Active Material

The Al element content in the positive electrode active material was evaluated through ICP (inductively coupled plasma spectroscopy) component analysis.

### (5) Evaluation of Residual Lithium Content

Distilled water was added to the positive electrode active material, residual lithium was extracted using a stirrer, and then the positive electrode active material powder and an extract were separated using a filtering apparatus. Thereafter, the extract was measured through neutralization titration using a Metrohm potentiometric titrator to evaluate residual lithium.

### Experimental Example 3: Evaluation of Electrochemical Characteristics of Lithium Secondary Battery

### (1) Evaluation of Initial Capacity and Initial Efficiency

After a lithium secondary battery half-cell was manufactured and aged at 25°C for 12 hours, a charge/discharge test was performed at 25°C. For evaluation of initial capacity, 200 mAh/g was used as a reference capacity, charging was performed to 4.25 V at a constant current of 0.1 C, and then switched to constant voltage, and charging was performed until an end current reached 0.05 C. After charging, a rest time of 10 minutes was provided, and then discharging was performed to 2.5 V at a constant current of 0.1 C based on a reference capacity of 200 mAh/g.

### (2) Evaluation of High-Temperature Capacity Retention Rate (45°C, 30 Cycles)

After a lithium secondary battery half-cell was manufactured, charging was performed at 45°C to 4.25 V at a constant current of 0.5 C, and then switched to constant voltage, and charging was performed until an end current reached 0.05 C. After charging, a rest time of 10 minutes was provided, and then discharging was performed to 2.5 V at a constant current of 1.0 C. Under the above charge/discharge cycle conditions, charge/discharge was performed 30 times, and at this time, a capacity retention rate of the 30th cycle relative to the first cycle was calculated.

Referring to Tables 1 to 3, it was confirmed that, in the case of Examples 1 to 3, in which overall process conditions according to the present invention, such as the atomic layer deposition-type coating process, heat treatment at an appropriate temperature after the coating process, and the number of atomic layer deposition cycles, were appropriately controlled, overall physical properties such as the average thickness of the coating layer, the c-axis lattice constant of the lithium metal oxide, and the I(003)/I(104) peak intensity ratio were appropriately obtained within the ranges according to the present invention. In addition, it was confirmed that residual lithium was reduced and lifespan characteristics were improved as compared with Comparative Example 1, which was the lithium metal oxide base material. In addition, although capacity characteristics were somewhat lower than those of Comparative Example 1, it was confirmed that capacity characteristics were more excellently implemented than in the other Comparative Examples.

In contrast, in the case of Comparative Example 1, which was the lithium metal oxide base material, it was confirmed that lifespan characteristics were poor and the residual lithium content was too high.

In the case of Comparative Example 2, in which the heat treatment process was not performed, it was confirmed that the c-axis lattice constant and the I(003)/I(104) peak intensity ratio of the positive electrode active material were outside the ranges according to the present invention, and the residual lithium content was too high. In addition, it was confirmed that capacity and lifespan characteristics of the battery were inferior to those of the Examples.

In the case of Comparative Examples 3 to 5, in which the heat treatment process was performed but the heat treatment temperature was too low, it was confirmed that the c-axis lattice constant and the I(003)/I(104) peak intensity ratio of the positive electrode active material were outside the ranges according to the present invention, and the residual lithium content was too high. In addition, it was confirmed that capacity and lifespan characteristics of the battery were inferior to those of the Examples.

In the case of Comparative Examples 6 to 8, in which the heat treatment process was performed but the heat treatment temperature was too high, it was confirmed that the c-axis lattice, and in some cases, the I(003)/I(104) peak intensity ratio, were outside the ranges according to the present invention. In addition, the residual lithium content was favorable, but it was confirmed that capacity and lifespan characteristics of the battery were inferior to those of the Examples. Meanwhile, in the case of Comparative Examples 6 to 8, it was confirmed that, when the heat treatment temperature was too high, the average thickness of the coating layer also became too thick, thereby adversely affecting the positive electrode active material.

In the case of Comparative Example 9, in which the heat treatment process was not performed, it was confirmed that the c-axis lattice constant and the I(003)/I(104) peak intensity ratio of the positive electrode active material were outside the ranges according to the present invention. In addition, it was confirmed that capacity and lifespan characteristics of the battery were inferior to those of the Examples.

In the case of Comparative Example 10, in which the heat treatment process was performed at an appropriate temperature but the number of atomic layer deposition cycles was 2, it was confirmed that the average thickness of the coating layer was too thick and that the c-axis lattice constant and the I(003)/I(104) peak intensity ratio of the positive electrode active material were outside the ranges according to the present invention. In addition, it was confirmed that capacity and lifespan characteristics of the battery were inferior to those of the Examples.

Although preferred embodiments of the present invention have been described above, the present invention is not limited thereto, and various modifications can be made and practiced within the scope of the claims, the detailed description of the invention, and the accompanying drawings, and it is obvious that these also fall within the scope of the present invention.

Accordingly, the substantial scope of rights of the present invention should be defined by the appended claims and equivalents thereof.

## Claims

1. A positive electrode active material for a lithium secondary battery, comprising:
a lithium metal oxide having a single particle form and a nickel (Ni)-containing layered crystal structure; and
a coating layer surrounding an entire surface of the lithium metal oxide and containing an aluminum (Al) compound,
wherein the lithium metal oxide has a c-axis lattice constant of 14.14 to 14.22 Å when analyzed by an X-ray diffraction pattern, and
wherein the coating layer has an average thickness of 0.5 to 1.5 nm.

2. The positive electrode active material for a lithium secondary battery of claim 1,
wherein the lithium metal oxide has a ratio of a peak intensity of a (003) plane to a peak intensity of a (104) plane (I(003)/I(104)) of 1.44 to 1.6 when analyzed by an X-ray diffraction pattern.

3. The positive electrode active material for a lithium secondary battery of claim 1,
wherein a content of an aluminum element in the positive electrode active material is 500 to 1000 ppm based on a total weight of the positive electrode active material.

4. The positive electrode active material for a lithium secondary battery of claim 1,
wherein the aluminum compound includes Al₂O₃, and the Al₂O₃ is amorphous.

5. The positive electrode active material for a lithium secondary battery of claim 1,
wherein the positive electrode active material has a residual lithium content of 15000 ppm or less.

6. The positive electrode active material for a lithium secondary battery of claim 1,
wherein a content of nickel in the lithium metal oxide is 80 mol% or more based on a total number of moles of metals excluding lithium.

7. The positive electrode active material for a lithium secondary battery of claim 1,
wherein the lithium metal oxide is represented by the following Chemical Formula 1:
[Chemical Formula 1] Liₐ[NiₓCo_{y}Mn_{z}M_{w}]O₂
wherein, in Chemical Formula 1, 0.8≤a≤1.3, 0.8≤x<1, 0≤y≤0.2, 0≤z≤0.2, 0≤w≤0.2, x+y+z+w=1, and M is Zr, Al, B, Y, Ti, Nb, W, V, Cr, Mo, Ta, Fe, Cu, Zn, Ga, Ge, Ru, Rh, Sn, Sb, Re, Ir, Pt, Pb, Bi, Na, K, Rb, Cs, Ca, Sr, Ba, Mg, Si, Sc, or a combination thereof.

8. A method for manufacturing a positive electrode active material for a lithium secondary battery, comprising:
preparing a lithium metal oxide having a single particle form and a nickel (Ni)-containing layered crystal structure;
forming a coating layer containing an aluminum compound on the lithium metal oxide by an atomic layer deposition method; and
heat-treating the lithium metal oxide on which the coating layer is formed at a temperature of 370 to 530°C to form a positive electrode active material.

9. The method for manufacturing a positive electrode active material for a lithium secondary battery of claim 8,
wherein the atomic layer deposition is performed in 1 cycle.

10. The method for manufacturing a positive electrode active material for a lithium secondary battery of claim 9,
wherein one cycle of the atomic layer deposition comprises:
supplying an aluminum-containing gas onto the lithium metal oxide to adsorb the aluminum-containing gas onto the lithium metal oxide; and
supplying and reacting a reactant onto the lithium metal oxide on which the aluminum-containing gas is adsorbed.

11. The method for manufacturing a positive electrode active material for a lithium secondary battery of claim 10,
wherein a supply amount of the aluminum-containing gas is 0.1 to 2 wt% based on a total weight of the lithium metal oxide.

12. The method for manufacturing a positive electrode active material for a lithium secondary battery of claim 10,
wherein a supply amount of the reactant is 0.001 to 0.01 wt% based on a total weight of the lithium metal oxide.

13. The method for manufacturing a positive electrode active material for a lithium secondary battery of claim 8,
wherein the atomic layer deposition is performed at a temperature of 150 to 300°C.

14. The method for manufacturing a positive electrode active material for a lithium secondary battery of claim 8,
wherein the atomic layer deposition is performed at a pressure of 1 to 10 torr.

15. A positive electrode for a lithium secondary battery, comprising the positive electrode active material of claim 1.

16. A lithium secondary battery comprising the positive electrode for a lithium secondary battery of claim 15.
